# EUROPEAN PATENT APPLICATION

(11) **EP 3 150 979 A1**
(43) Date of publication of application: **05.04.2017**
(21) Application number: 15290247.4
(22) Date of filing: 29.09.2015
(51) Int. Cl.: G01F 23/68, G01F 23/70

(54) **SENSOR OF A FILLING-LEVEL METER, FILLING-LEVEL METER AND TANK WITH AT LEAST ONE SENSOR**

(71) Applicant: MANN + HUMMEL GMBH, 71638 Ludwigsburg (DE)
(72) Inventor: Bregeon, Guillaume, 53000 Laval (FR); De Cara, Gerald, 53210 Soulgé sur Ouette (FR)

(57) **Abstract**

The present invention relates to a sensor (20) of a filling-level meter of a liquid tank, in particular for an operating liquid, in particular of a motor vehicle, a filling-level meter and tank. The sensor (20) having at least one pair of electric lines (38) for an electric circuit with at least one electric contact (36) each. The electric contacts (36) of at least one pair of electric lines (38) are arranged such that they are contactless at least in one noncontact state of the filling-level meter. The electric contacts (36) can be connected in at least one contact state by use of at least one mechanically operated electric connecting element of the filling-level meter. The electric connecting element does not necessary has to be part of the sensor (20). The at least one electric connecting element can be mechanically connected to a float assembly. The at least one electric connecting element in particular with the float assembly can be moved relative to the at least one pair of electric contacts (36) between the at least one noncontact state and the at least one contact state. The sensor (20) comprises at least one electric bypass resistance (42), which electrically connects the at least one pair of electric lines (38).

## Description

### Technical Field

The present invention relates to a sensor of a filling-level meter of a liquid tank, in particular for an operating liquid, in particular of a motor vehicle.

The invention further relates to a filling-level meter of a liquid tank, in particular for an operating liquid, in particular of a motor vehicle, with at least one sensor.

The invention furthermore relates to a tank for a liquid, in particular for an operating liquid, in particular of a motor vehicle, with at least one sensor of a filling-level meter.

### State of Technology

The DE 101 11 018 A1 discloses a warning device in a fluid reservoir of a braking system which can be tested manually. The warning device serves as a means to trigger a warning signal if the position of the floater sinks below a preset value, in which the fluid level in the reservoir falls below a minimum. For test purpose, the floater can be brought manually in a position below the preset position by a mechanical connection. If the warning device does not give an alarm in this position of the floater, the warning device has to be repaired or replaced.

It is an object of the invention to provide a sensor, a filling-level meter and a tank of the above-mentioned kind, where the functioning of the filling-level meter can be tested easier and more reliable.

### Disclosure of Invention

The object is achieved by that the sensor having at least one pair of electric lines for an electric circuit with at least one electric contact each, wherein the electric contacts of at least one pair of electric lines are arranged such that they are contactless at least in one noncontact state of the filling-level meter and the electric contacts can be connected in at least one contact state by use of at least one mechanically operated electric connecting element of the filling-level meter, wherein the electric connecting element does not necessary has to be part of the sensor, wherein the at least one electric connecting element can be mechanically connected to a float assembly, wherein the at least one electric connecting element in particular with the float assembly can be moved relative to the at least one pair of electric contacts between the at least one noncontact state and the at least one contact state, wherein the sensor comprises at least one electric bypass resistance, which electrically connects the at least one pair of electric lines.

According to the invention, at least one electric bypass resistance permanently contacts the at least one pair of electric lines. Particularly, the at least one bypass resistance can be realized by a resistance or a conductive material. The at least one electric bypass resistance closes the electric circuit in a noncontact state of the filling-level meter. In a contact state of the filling-level meter, the at least one electric bypass resistance is connected parallel to the at least one electric connecting element. An electric current through the at least one bypass resistance alone in the noncontact state is different to an electric current through the parallel connection of the at least one bypass resistance and the at least one electric connecting element in the contact state. The currents can be identified by a control unit, in particular a test control unit of an assembly or production line and/or an electric control unit (ECU) of the liquid system and/or a motor vehicle, with which the electric lines can be connected. In this way, with the control unit both the contact state and the noncontact state can be identified active and can be distinguished from each other. The primary function of the filling-level meter can be controlled independent of a liquid level in the liquid tank.

If the control unit detects none of said currents, it can identify a malfunction of the filling-level meter, in particular of the sensor. With the control unit a warning signal, in particular an acoustic and/or optic warning signal, can be initialized if a malfunction is identified.

Different to the known state-of-the-art, the filling-level meter, in particular the sensor, can easy be tested automatically by the control unit. A manual override for testing the function is not necessary.

Advantageously, the at least one float assembly can be moved relative to the electric contacts of the at least one pair of electric lines. The at least one float assembly can be moved by the liquid dependent on a liquid level. So, the contact between the at least one electric lines and the at least one electric connecting element can be made dependent on the liquid level.

Advantageously, in cases when a liquid level is above the predetermined limit the float assembly with the at least one electric connecting element can take a noncontact state. In this way, under regular operating or test conditions, in which enough liquid is in the tank, the filling-level meter is in its noncontact state. In the noncontact state, the current is defined by the at least one bypass resistance only. So, a characteristic regular or test current flow under regular operating or test conditions can be identified by the control unit.

Advantageously, in cases when a liquid level in the liquid tank is below the predetermined limit the float assembly with the at least one electric connecting element can take a contact state. In this way, under irregular operating or test conditions, in which not enough liquid is in the tank, the filling-level meter is in its contact state. So, a warning current can flow through the connection of the at least one electric connecting element and the at least one bypass resistance. The characteristic warning current only flows if not enough liquid is in the tank.

With the invention, it can be validated that the sensor is assembled and well connected to the system at the end of a production line in particular in a car manufacturer workshop. If the detection system is open, in particular the tank is full of liquid, the addition of a resistance or a conductive material between the two electric lines allows a flow of an electrical test current. The current and/or voltage can be controlled by the control unit.

Advantageously, at least one electric connecting element can be a short-circuit element. With a short-circuit element, a direct connection between the electric contacts of at least one pair of electric lines with nearly no electrical resistance can be realized. Thus, a high increase of the respective current can be identified. Further, short-circuit elements easy can be realized repeatable.

The electric connecting element is operated mechanically. It is part of a contact electrical connector. Different to a reed switch sensor known from the state-of-the-art, which is driven by magnetic forces, the inventive sensor is driven by mechanical forces. The mechanical forces for moving the electric connecting element between the contact state and the noncontact state can be generated by a floater of the float assembly.

Advantageously, the at least one electric connecting element can be part of the filling-level meter. At least one electric connecting element can be part of the sensor and/or part of the float assembly. The at least one electric connecting element can be connected mechanically to the float assembly.

The inventive sensor with the at least one electric connecting element can be realized easier, in particular cheaper, than a sensor with a reed switch. Further, the tolerance of detection of a reed switch sensor is higher than the tolerance of detection of the inventive mechanical connector. In this way, the inventive sensor can be realized with a more exact acting point than a sensor with a reed switch. So, a filling level can be determined more exact with the inventive sensor. With the inventive sensor liquid can be saved. In the case of reed switch sensors more liquid has to be added in the tank in order to respect filling requirements, in particular automotive standards of brake fluid tanks.

The invention can be used with liquid systems of vehicles, in particular motor vehicles, and/or internal combustion engines. The invention can be used with brake fluid systems, cooling fluid systems, washing fluid systems, in particular windshield wiper fluid systems, hydraulic fluid systems or other kinds of liquid fluid systems and/or expansion tanks. The invention can also be used in technical areas beyond automotive engineering. In particular, the invention can be used with industrial engines.

Favorably, the liquid can be electrical nonconductive. In this case, the requirements for isolation of electrical parts of the filling-level meter, in particular at least one sensor, against liquid bearing spaces of the tank can be eased.

The invention can be used in assembly or production lines for liquid systems. So, the function of the filling-level meter can be tested after production in particular at the end of the assembly line. The test can be made only at first assembly. Additionally or alternatively, the invention can be used in operation state of the liquid system.

According to a favorable embodiment of the invention, the electric resistivity of the at least one bypass resistance can be high compared to an electric resistivity realized by the at least one electric connecting element in combination with the at least one pair of electric lines with the electric contacts. In this way, the contact state and the noncontact state can be well-defined.

Favorably, the electric resistivity of the at least one bypass resistance can be more than 1 kΩ, in particular approximately between 4 kΩ and 5 kΩ.

According to a further favorable embodiment of the invention, at least one electric contact of at least one electric line and/or at least one electric connecting element can comprise or consist of at least one electroconductive material, in particular at least one metal and/or at least one electroconductive polymer.

The at least one electric contact and/or at least one electric connecting element can consist of a single material or a combination of different materials.

According to a further favorable embodiment of the invention, at least one bypass resistance can comprise or consist of at least one electric resistor and/or at least one electroconductive part of a housing of the sensor.

Advantageously, at least one bypass resistance can comprise or consist of a resistor. So, a resistivity of the at least one bypass resistance can easy be well-defined. A resistor can be assembled after manufacture of the rest of the sensor.

Additionally or alternatively, at least one bypass resistance can comprise or consist of at least one electroconductive part of a housing of the sensor. So, no additional components are necessary for realizing the at least one bypass resistance.

Particularly, said conductive material can replace usual plastic material of the housing.

Particularly, parts of the housing of the at least one sensor can be overmolded by electroconductive material.

According to a further favorable embodiment of the invention, at least one bypass resistance can be connected to at least one respective electric line by a solder connection, a welding connection, a snap-fit, a wire-wrap technique and/or another electric connection.

Advantageously, at least one bypass resistance can be connected to at least one, favorably to both electric lines of a pair.

Advantageously, at least one electric line, in particular at least one connector pin, can be integrated, in particular overmolded, by the material of a housing of the sensor. At least one opening can be realized in the housing of the sensor, through which at least one connection of at least one bypass resistance can be connected to at least one electric line. At least one resistor can be connected to the at least one connection after the at least one electric line is integrated in the housing.

At least one bypass resistance can be connected replaceable or not replaceable to at least one electric line. At least one bypass resistance can be connected modular. So, the resistance of the sensor can be adapted to different liquid systems and/or different filling-level meters.

According to a further favorable embodiment of the invention, the sensor can comprise at least one electric connection interface and/or at least one mechanic connection interface. With at least one electric connection interface the sensor can be connected to electric lines of a control unit. With at least one mechanic connection interface the sensor can be attached to a tank housing and/or to a plug of the electric lines of a control and/or test unit.

Advantageously, at least one electric connection interface and at least one mechanic connection interface can be combined. So, the required space and/or the parts required can be reduced.

According to a further favorable embodiment of the invention, the sensor can comprise at least one sealing means. Advantageously, at least one sealing means can be provided for sealing an opening of the tank for the sensor. Additionally or alternatively at least one sealing means can be provided for sealing at least one electric part, in particular at least one electric line and/or at least one electric contact and/or at least one electrical resistance, against liquid-bearing areas of the liquid tank.

At least one sealing means can be arranged between a sensor housing and the liquid tank.

According to a further favorable embodiment of the invention, electric contacts of at least one pair of electric lines can be arranged on opposite sides of a moving axis and/or a piston of the float assembly and at least respective electric contacts of the respective at least one electric connecting element can be arranged on opposite sides of the moving axis and/or the piston accordingly.

Advantageously, at least one electric connecting element can be coaxial to the moving axis and/or the piston. So, the at least one electric connecting element can be moved toward the at least one pair of electrical lines to close the contact.

Advantageously, at least one electric connecting element can be mechanically connected to the piston of the float assembly. Particularly, the piston can be coaxial to the moving axis.

Favorably, at least one connecting element can be arranged near an end of the piston. The at least one connecting element can be arranged opposed to the floater of the float assembly. Thus, the sensor with its electrical parts can be distant from the liquid. Advantageously, at least one electric connecting element can be realized as a disk-shaped and/or ring-shaped. So, both electrical contacts of the at least one pair of electrical lines can be contacted simultaneously.

Advantageously, at least one electric line can comprise or consist of a connector pin with at least one electric contact. Two connector pins easy can be arranged on opposite sides of a moving axis. At least one connector pin can be used with one end for connecting an electric line to the control unit and with on one end for connection with the at least one connecting element.

Advantageously, at least one bypass resistance or conductive material can connect two connector pins of a pair of electrical lines.

The object further is achieved with the filling-level meter by that at least one sensor having at least one pair of electric lines for an electric circuit with at least one electric contact each, wherein the electric contacts of at least one pair of electric lines are arranged such that they are contactless at least in one noncontact state of the filling-level meter and the electric contacts can be connected in at least one contact state by use of at least one mechanically operated electric connecting element of the filling-level meter, wherein the electric connecting element does not necessary has to be part of the sensor, wherein the at least one electric connecting element can be mechanically connected to a float assembly, wherein the at least one electric connecting element in particular with the float assembly can be moved relative to the at least one pair of electric contacts between the at least one noncontact state and the at least one contact state, wherein the sensor comprises at least one electric bypass resistance, which electrically connects the at least one pair of electric lines.

The object furthermore is achieved with the tank by that at least one sensor having at least one pair of electric lines for an electric circuit with at least one electric contact each, wherein the electric contacts of at least one pair of electric lines are arranged such that they are contactless at least in one noncontact state of the filling-level meter and the electric contacts can be connected in at least one contact state by use of at least one mechanically operated electric connecting element of the filling-level meter, wherein the electric connecting element does not necessary has to be part of the sensor, wherein the at least one electric connecting element can be mechanically connected to a float assembly, wherein the at least one electric connecting element in particular with the float assembly can be moved relative to the at least one pair of electric contacts between the at least one noncontact state and the at least one contact state, wherein the sensor comprises at least one electric bypass resistance, which electrically connects the at least one pair of electric lines.

The above-mentioned advantages and characteristic features of the inventive sensor, the inventive filling-level meter and the inventive tank apply analogously among each other. The single advantages and characteristic features can be combined among each other.

### Brief Description of Drawings

The present invention together with the above-mentioned and other objects and advantages may best be understood from the following detailed description of an embodiment, but not restricted to the embodiment, wherein is shown schematically
- figure 1: a brake fluid tank of a motor vehicle with a filling-level meter, wherein a fluid level is above a predetermined limit;
- figure 2: the brake fluid tank of figure 1, wherein the fluid level is below the predetermined limit;
- figure 3: an isometric view of a sensor of the filling-level meter of figures 1 and 2;
- figure 4: a side view of the sensor of figure 3.

In the drawings, equal or similar elements are referred to by equal reference numerals. The drawings are merely schematic representations, not intended to portray specific parameters of the invention. Moreover, the drawings are intended to depict only typical embodiments of the invention and therefore should not be considered as limiting the scope of the invention.

### Embodiment(s) of Invention

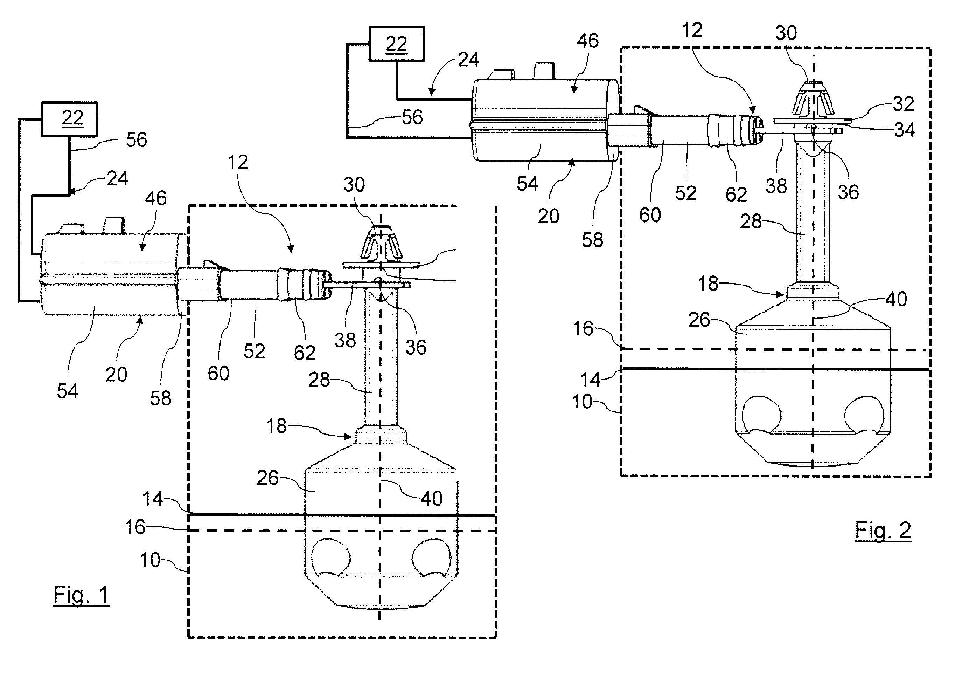

Figure 1 depicts a brake fluid tank 10 of a motor vehicle with a filling-level meter 12. The tank 10 is only schematic indicated by broken lines. A level 14 of the brake fluid in the tank 10 is in figure 1 above a predetermined limit 16. The filling-level meter 12 there is in a noncontact state relating to a contact of a sensor 20. Figure 2 shows the brake fluid tank 10 with the level 14 of the brake fluid below the predetermined limit 16. In this situation the filling-level meter 12 is in a contact state relating to the contact of the sensor 20.

The filling-level meter 12 has a float assembly 18, the sensor 20 and an electric control unit 22. The electric control unit 22 can be part of the motor vehicle or part of a test unit of a production line. The sensor 20 and the electric control unit 22 realize an electric circuit 24.

The float assembly 18 has a floater 26 which swims in the brake fluid. A piston 28 is attached to the floater 26. It directs vertical up. On its free end opposite to the floater 26 the piston 28 has a snap-fit 30. With the snap-fit 30 an electric connecting element 32 is attached to the piston 28. The connecting element 32 is a metal ring. The connecting element 32 is coaxial to the piston 28.

The connecting element 32 projects over the radial outer circumferential side of the piston 28. The side of the overhang of the connecting element 32 which is facing the floater 26 is forms electric contacts 34. The electric contacts 34 are dedicated to respective electric contacts 36 of connector pins 38 of the sensor 20. The electric contacts 34 of the connecting element 32 are arranged on opposite sides of the piston 28 and of a moving axis 40 of the float assembly 18. Exemplary, the moving axis 40 is arranged vertically. The float assembly 18 with the connecting element 32 can be moved coaxial to the moving axis 40 dependent on the level 14 of the brake fluid. So, the float assembly 18 with the connecting element 32 can be moved solely by mechanical forces between the contact state and the noncontact state of the filling-level meter 12. The electric connecting element 32 is mechanically operated.

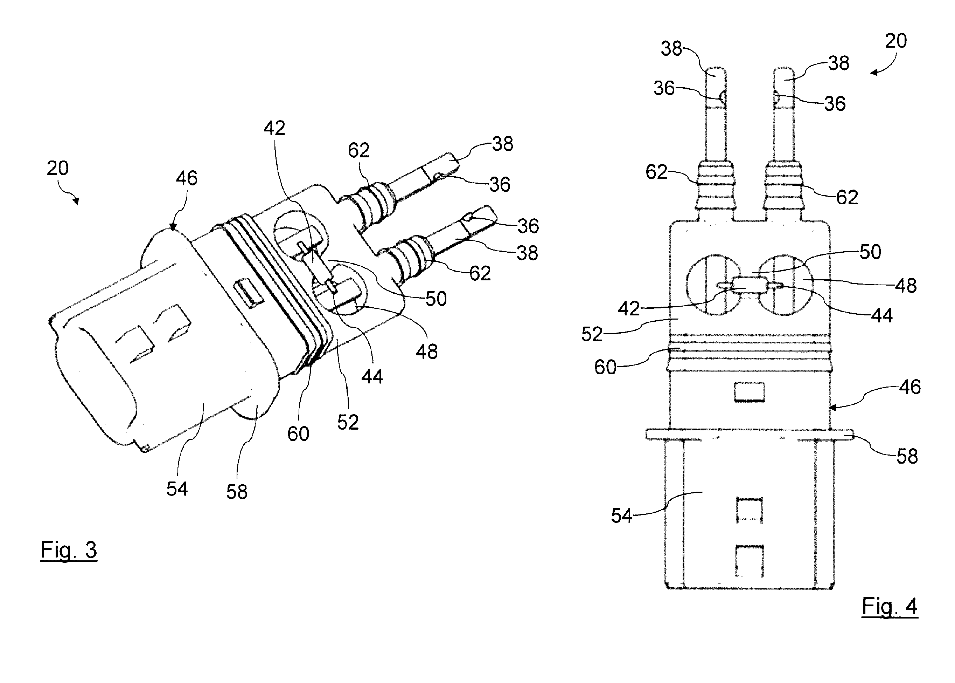

The sensor 20 is shown in detail in figures 3 and 4. The sensor 20 has one pair of electric lines realized by the connector pins 38. The connector pins 38 are straight. The connector pins 38 are made of metal. The connector pins 38 run parallel in one plane. Said plane is perpendicular to the moving axis 40. Each connector pin 38 comprises one of the electric contacts 36. The electric contacts 36 are protrusions each on the same side of aforementioned plane with the connector pins 38.

In the operational condition, shown in figure 1 and 2, the connector pins 38 are part of the electric circuit 24 together with the electronic control unit 22. The connector pins 38 with the electrical contacts 36 are arranged on opposite sides of the piston 28 and the moving axis 40. The connector pins 38 are arranged between the connecting element 32 and the floater 26. The electrical contacts 36 face the connecting element 32 each. The electric contacts 36 are arranged such that they are contactless in the noncontact state of the filling-level meter 12. The electric connecting element 32 can be moved toward the connector pins 38 to close the contact in the contact state as shown in figure 2. With the connecting element 32 both electric contacts 36 of the connector pins 38 being contacted simultaneously. In the contact state the connecting element 32 closes the electric circuit 24 by connecting the pair of electric contacts 36.

The sensor 20 further comprises an electric bypass resistor 42, which is shown in figures 3 and 4. The resistor 42 electrically connects the pair of connector pins 38. The resistor 42 is connected to the connector pins 38 by a solder connection 44 each. The electric resistivity of the resistor 42 exemplary can be approximately 4.7 kΩ. The electric resistivity of the resistor 42 is high compared to an electric resistivity realized by the electric connecting element 32 in combination with the pair of connector pins 38 with the electric contacts 36 in the contact state. In this way, the contact state and the noncontact state are well-defined.

The connector pins 38 are overmolded by plastic material of a housing 46 of the sensor 20. Two openings 48 being realized in the housing 46 of the sensor 20. The openings 48 leave sections of the connector pins 38 open each for the solder connections 44 with the resistor 42. The openings 48 are connected by a cavity 50, in which the resistor 42 is placed. The resistor 42 being connected to the connector pins 38 after the connector pins 38 being integrated in the housing 46.

The sensor housing 46 has an inner mechanic connection interface 52 for attaching to the tank 10. The sensor housing 46 further has an outer mechanic and electric connection interface 54 with a plug for connecting signal lines 56 to and from the electronic control unit 22. The connector pins 38 reach into the outer mechanic and electric connection interface 54.

The inner mechanic connection interface 52 comprises an outer sealing collar 58. The outer sealing collar 58 is adjacent to the outer mechanic and electric connection interface 54. With the outer sealing collar 58 an opening of the tank 10 for the sensor 20 can be sealed against the surrounding.

The inner mechanic connection interface 52 further comprises a first inner sealing section 60. The first inner sealing section 60 is arranged between the outer sealing collar 58 and the openings 48 for the bypass resistor 42. Two second inner sealing sections 62 partly encase the connector pins 38 each between the openings 48 and the electric contacts 36. With the first inner sealing section 60 and the second inner sealing sections 62 the resistor 42 can be sealed against the fluid bearing area of the brake fluid tank 10.

After manufacturing the tank 10 with the filling-level meter 12 at the end of an assembly line the sensor 20 being connected to the control unit 22. The tank 10 being filled with brake fluid.

If the level 14 of the brake fluid is above the limit level 16, as shown in figure 1, the filling-level meter 12 is in its noncontact state. Since the electric circuit 24 is opened, the control unit 22 gives no warning signal for low fluid level. By use of a test routine with the control unit 22 a test current flow through the resistor 42 can be tested. If the control unit 22 identifies the correct test current flow, it can release a respective positive test signal. This positive test signal signifies that the filling-level meter 12 is functioning. If the test current flow is not correct, the control unit 22 can release a respective negative test signal which signifies, that the filling-level meter 12 is not functioning correct. The filling-level meter 12 has to be repaired or replaced.

If the level 14 of the brake fluid is below the limit level 16, as shown in figure 2, the filling-level meter 12 is in its contact state. Since the electric circuit 24 is closed, the control unit 22 gives a warning signal for low fluid level. The tank 10 has to be filled up. The warning signal also signifies, that the filling-level meter 12 is functioning.

## Claims

1. Sensor (20) of a filling-level meter (12) of a liquid tank (10), in particular for an operating liquid, in particular of a motor vehicle, wherein the sensor (20) having at least one pair of electric lines (38) for an electric circuit (24) with at least one electric contact (36) each, wherein the electric contacts (36) of at least one pair of electric lines (38) are arranged such that they are contactless at least in one noncontact state of the filling-level meter (12) and the electric contacts (36) can be connected in at least one contact state by use of at least one mechanically operated electric connecting element (32) of the filling-level meter (12), wherein the electric connecting element (32) does not necessary has to be part of the sensor (20), wherein the at least one electric connecting element (32) can be mechanically connected to a float assembly (18), wherein the at least one electric connecting element (32) in particular with the float assembly (18) can be moved relative to the at least one pair of electric contacts (36) between the at least one noncontact state and the at least one contact state, wherein the sensor (20) comprises at least one electric bypass resistance (42), which electrically connects the at least one pair of electric lines (38).

2. Sensor according to claim 1, **characterized in that** the electric resistivity of the at least one bypass resistance (42) is high compared to an electric resistivity realized by the at least one electric connecting element (32) in combination with the at least one pair of electric lines (38) with the electric contacts (36).

3. Sensor according to claim 1 or 2, **characterized in that** at least one electric contact (36) of at least one electric line (38) and/or at least one electric connecting element (32) comprises or consists of at least one electroconductive material, in particular at least one metal and/or at least one electroconductive polymer.

4. Sensor according to one of the previous claims, **characterized in that** at least one bypass resistance (42) comprises or consists of at least one electric resistor and/or at least one electroconductive part of a housing (46) of the sensor (20).

5. Sensor according to one of the previous claims, **characterized in that** at least one bypass resistance (42) is connected to at least one respective electric line (38) by a solder connection (44), a welding connection, a snap-fit, a wire-wrap technique and/or another electric connection.

6. Sensor according to one of the previous claims, **characterized in that** the sensor (20) comprises at least one electric connection interface (54) and/or at least one mechanic connection interface (52, 54).

7. Sensor according to one of the previous claims, **characterized in that** the sensor (20) comprises at least one sealing means (58, 60, 62).

8. Sensor according to one of the previous claims, **characterized in that** electric contacts (36) of at least one pair of electric lines (38) can be arranged on opposite sides of a moving axis (40) and/or a piston (28) of the float assembly (18) and at least respective electric contacts (36) of the respective at least one electric connecting element (32) can be arranged on opposite sides of the moving axis (40) and/or the piston (28) accordingly.

9. Filling-level meter (12) of a liquid tank (10), in particular for an operating liquid, in particular of a motor vehicle, with at least one sensor (20), wherein at least one sensor (20) having at least one pair of electric lines (38) for an electric circuit (24) with at least one electric contact (36) each, wherein the electric contacts (36) of at least one pair of electric lines (38) are arranged such that they are contactless at least in one noncontact state of the filling-level meter (12) and the electric contacts (36) can be connected in at least one contact state by use of at least one mechanically operated electric connecting element (32) of the filling-level meter (12), wherein the electric connecting element (32) does not necessary has to be part of the sensor (20), wherein the at least one electric connecting element (32) can be mechanically connected to a float assembly (18), wherein the at least one electric connecting element (32) in particular with the float assembly (18) can be moved relative to the at least one pair of electric contact (36) between the at least one noncontact state and the at least one contact state, wherein the sensor (20) comprises at least one electric bypass resistance (42), which electrically connects the at least one pair of electric lines (38).

10. Tank (10) for a liquid, in particular for an operating liquid, in particular of a motor vehicle, with at least one sensor (20) of a filling-level meter (12), wherein at least one sensor (20) having at least one pair of electric lines (38) for an electric circuit (24) with at least one electric contact (36) each, wherein the electric contacts (36) of at least one pair of electric lines (38) are arranged such that they are contactless at least in one noncontact state of the filling-level meter (12) and the electric contacts (36) can be connected in at least one contact state by use of at least one mechanically operated electric connecting element (32) of the filling-level meter (12), wherein the electric connecting element (32) does not necessary has to be part of the sensor (20), wherein the at least one electric connecting element (32) can be mechanically connected to a float assembly (18), wherein the at least one electric connecting element. (32) in particular with the float assembly (18) can be moved relative to the at least one pair of electric contacts (36) between the at least one noncontact state and the at least one contact state, wherein the sensor (20) comprises at least one electric bypass resistance (42), which electrically connects the at least one pair of electric lines (38).
